# EUROPÄISCHE PATENTANMELDUNG

(11) **EP 4 582 390 A1**
(43) Veröffentlichungstag der Anmeldung: **09.07.2025**
(21) Anmeldenummer: 24217832.5
(22) Anmeldetag: 05.12.2024
(51) Int. Cl.: C02F 1/00, C02F 1/42

(54) **STEUEREINRICHTUNG SOWIE VERFAHREN ZUR STEUERUNG EINER TRINKWASSERBEHANDLUNGSANLAGE**

(30) Priorität: 04.01.2024 DE 202024100015 U
(71) Anmelder: Grünbeck AG, 89420 Höchstädt a.d. Donau (DE)
(72) Erfinder: Jaumann, Robert, 86707 Westendorf (DE); Röhrle, Michael, 86678 Ehingen (DE); Keßler, Norbert, 86405 Meitingen (DE)
(74) Vertreter: Charrier Rapp & Liebau

(57) **Zusammenfassung**

Die Erfindung betrifft eine Steuereinrichtung (S) zur Steuerung einer Trinkwasserbehandlungsanlage (1) mit einer Wasserbehandlungseinrichtung (2), einem Eingang (3) zum Einleiten von Wasser in die Wasserbehandlungseinrichtung (2) und einem Ausgang (4) zum Ausleiten von behandeltem Wasser aus der Trinkwasserbehandlungsanlage (1), wobei die Trinkwasserbehandlungsanlage (1) in einem Wasserbehandlungsmodus und einem Reinigungsmodus betreibbar ist und wobei die Steuereinrichtung (S) zu einer durch einen vorgegebenen Reinigungsparameter bestimmten, regelmäßigen Einleitung des Reinigungsmodus eingerichtet ist. Die Aufgabe, eine Steuereinrichtung bereitzustellen, die eingerichtet ist, um auch bei höheren Temperaturen des bereitgestellten Wassers oder hohen Umgebungstemperaturen Trinkwasser mit hoher Qualität bereitzustellen, löst die Erfindung dadurch, dass die Trinkwasserbehandlungsanlage (1) einen Temperatursensor (5, 6) zur Erfassung der Wassertemperatur vor oder in der Wasserbehandlungseinrichtung (2) aufweist und die Steuereinrichtung (S) eingerichtet ist, den Reinigungsparameter zu ändern oder den Reinigungsmodus unmittelbar einzuleiten, wenn die erfasste Wassertemperatur eine festgelegte Grenztemperatur übersteigt. Weiter ist ein Verfahren zur Steuerung einer Trinkwasserbehandlungsanlage Gegenstand der Erfindung.

## Beschreibung

Die Erfindung betrifft eine Steuereinrichtung zur Steuerung einer Trinkwasserbehandlungsanlage nach dem Oberbegriff des Anspruchs 1 sowie ein Verfahren zur Steuerung einer Trinkwasserbehandlungsanlage nach Anspruch 15.

Trinkwasserbehandlungsanlagen werden für die Wasseraufbereitung eingesetzt, beispielsweise um Stoffe aus dem Wasser zu entfernen. Insbesondere werden Trinkwasserbehandlungsanlagen zur Reinigung, Entkeimung bzw. Sterilisation sowie zur Enthärtung oder Entsalzung von Wasser eingesetzt. Hierfür können die Trinkwasserbehandlungsanlagen Wasserbehandlungsmittel, wie beispielsweise Filter oder Ionenaustauscher, enthalten.

Ein Beispiel für eine Trinkwasserbehandlungsanlage ist eine Wasserenthärtungsanlage, in der die im Wasser gelösten, härtebildenden Erdalkali-Kationen des Kalziums und des Magnesiums zumindest teilweise aus dem Wasser beseitigt werden. Hierfür werden insbesondere Ionenaustauscher eingesetzt. Speziell enthalten die Wasserenthärtungsanlagen dabei einen Behälter, der mit dem Ionenaustauscher gefüllt ist und durch den das zu enthärtende Rohwasser geleitet wird, wobei die härtebildenden Kalzium- und Magnesium-Ionen gegen eine äquivalente Menge von Natrium-Ionen getauscht werden. In dem enthärteten Wasser sind die Kalzium- und Magnesium-Ionen weitgehend durch Natrium-Ionen ersetzt. Für technische Zwecke kann auf diese Weise vollständig enthärtetes Wasser hergestellt werden. Für Haushaltsanwendungen wird dagegen wegen der günstigeren Eigenschaften und aus Salzspargründen teilenthärtetes Wasser bevorzugt. In Haushalts-Wasserenthärtungsanlagen erfolgt deshalb in der Regel eine Vermischung von Rohwasser und voll enthärtetem Wasser. Hierfür kann die Wasserenthärtungsanlage eine parallel zum Ionenaustauscher angeordnete Verschneidevorrichtung enthalten, in der dem mittels des Ionenaustauschers (voll) enthärteten Wasser eine bestimmte Menge Rohwasser zugemischt wird.

Beim Enthärtungsvorgang in einer Wasserenthärtungsanlage werden die am Ionenaustauscher gebundenen Natrium-Ionen ans Wasser abgegeben während die Kalzium- und Magnesium-Ionen aus dem Wasser entfernt werden. Nach einer gewissen Betriebsdauer ist der Ionenaustauscher einer Wasserenthärtungsanlage daher erschöpft. Der Ionenaustauscher kann durch eine Salzlösung, insbesondere eine 8- bis 12-prozentige Natriumchlorid-Lösung, regeneriert werden. Bei der Regeneration werden die vom Ionenaustauscher während des Enthärtungsvorgangs aufgenommenen Kalzium- und Magnesium-Ionen gegen andere Ionen, insbesondere durch Natrium-Ionen der Natriumchlorid-Lösung, ausgetauscht. Hierfür wird in der Wasserenthärtungsanlage durch einen Regenerationsbehälter eine Regenerierlösung, insbesondere eine wässrige Natriumchlorid-Lösung, bereitgestellt, die in einem Regeneriermodus in den Behälter mit dem Ionenaustauscher geleitet wird, um den Ionenaustauscher zu regenerieren. Zum Ende des Regeneriermodus, der üblicherweise zwischen 15 Minuten und 120 Minuten dauert, wird die Regenerierlösung durch Einleitung von z.B. Rohwasser aus dem Ionenaustauscherbehälter verdrängt und die dabei entstehende Spüllösung wird zur Entsorgung in einen Abwasserkanal geleitet.

Aus DE 10 2021 103 911 A1 ist beispielsweise eine Wasserbehandlungsanlage umfassend eine Wasserbehandlungseinrichtung mit regenerierbaren Wasserbehandlungsmitteln, einen Eingang, einen Ausgang und einen Abfluss bekannt. Die Steuerung der Wasserbehandlungsanlage erfolgt dabei über eine Steuereinrichtung, die zur Steuerung der Wasserbehandlungsanlage in mindestens einem ersten Betriebsmodus, in dem Wasser vom Eingang durch die Wasserbehandlungsanlage zum Ausgang geleitet und das Wasser dabei in der Wasserbehandlungsanlage behandelt wird, und einem zweiten Betriebsmodus, in dem die Wasserbehandlungsmittel regeneriert werden, eingerichtet ist. Speziell erfolgt bei der Steuerung der genannten Wasserbehandlungsanlage am Ende des zweiten Betriebsmodus eine Spülung, in der Wasser durch die Wasserbehandlungseinrichtung zum Abfluss geleitet wird. Gegenstand der genannten Druckschrift ist ein hygienisch optimierter Betrieb der Wasserbehandlungsanlage, der dadurch ermöglicht wird, dass die Steuereinrichtung zur Steuerung der Wasserbehandlungsanlage in einem dritten Betriebsmodus eingerichtet ist, in dem ohne eine vorangehende Regeneration der Wasserbehandlungsmittel Wasser vom Eingang durch die Wasserbehandlungseinrichtung zum Abfluss geleitet wird.

Zur Verhinderung einer Verkeimung der Ionenaustauscher werden in Wasserenthärtungsanlagen auch keimtötende Chemikalien eingesetzt, insbesondere chlorhaltige Substanzen, wie z.B. Chlordioxid-Tabletten. Oftmals enthält das einer Wasserenthärtungsanlage zugeführte Rohwasser zur Desinfizierung bereits einen gewissen Chlorgehalt. Um auch bei der Zuführung von ungechlortem Rohwasser eine Verkeimung der Ionenaustauscher zuverlässig vermeiden zu können, sind aus dem Stand der Technik Wasserenthärtungsanlagen mit einer integrierten Desinfektionseinrichtung bekannt, in denen den Ionenaustauschern automatisch während eines Regeneriermodus ein Regeneriermittel mit desinfizierender Wirkung, beispielsweise elektrolytisch in einer Elektrolysezelle erzeugtes Chlor, zugeführt wird.

Beispielsweise ist aus EP 3 118 163 B1 eine Vorrichtung zur Wasserbehandlung, mit mindestens einem ersten Keimfilter und einer Wasserenthärtungseinrichtung bekannt. Die Wasserenthärtungseinrichtung und der Keimfilter stehen dabei mit einem Regeneriermittelreservoir in Verbindung, wobei ein in dem Regeneriermittelreservoir bevorratetes Regeneriermittel in einer Regenerierphase sowohl der Wasserenthärtungseinrichtung als auch dem wenigstens einen Keimfilter zugeführt wird, um das Ionenaustauscherharz der Wasserenthärtungseinrichtung und den Keimfilter zu regenerieren. Bei dem im Regeneriermittelreservoir bevorrateten Regeneriermittel handelt es sich um ein Regeneriersalz, insbesondere ein Chlorsalz, welches einerseits in der Lage ist, erschöpftes Ionenaustauscherharz der Wasserenthärtungseinrichtung und andererseits das Filtermaterial der Keimfilter zu regenerieren, bspw. indem in dem Filtermaterial angelagerte Mikroorganismen abgelöst werden. Speziell ist das Regeneriermittelreservoir dabei mit einer Elektrolyseeinrichtung gekoppelt, die eine wässrige und konzentrierte Lösung des im Regeneriermittelreservoir bevorrateten Regeneriermittels in eine wässrige Regenerierlösung umsetzt, welche Alkali-Ionen und Chlorid-Ionen sowie im Wasser als hypochlorige Säure dissoziiertes Chlorgas enthält. Die von der Elektrolyseeinrichtung erzeugte Regenerierlösung wird in einer Regenerierphase bevorzugt dem Keimfilter (oder auch mehreren Keimfiltern) und der Wasserenthärtungseinrichtung zugeführt. Die in der Regenerierlösung gelösten Alkali-Ionen, insbesondere Natrium-Ionen aus einer gesättigten Kochsalzsohle, verdrängen die vom Ionenaustauscherharz beim Betrieb der Vorrichtung aufgenommenen härtebildenden Kalzium- und Magnesium-Ionen und stellen dadurch die Enthärtungskapazität der Wasserenthärtungseinrichtung wieder her. Das in der Regenerierlösung dissoziierte Chlorgas sowie die in der Regenerierlösung gelösten Ionen bewirken in der Regenerierphase gleichzeitig eine Regenerierung des Filtermaterials des Keimfilters, indem die dort angelagerten Mikroorganismen abgetötet und/oder vom Filtermaterial abgelöst werden.

Für die Zukunft sind im Hinblick auf die durch die Klimaerwärmung zu erwartenden bzw. in den letzten Jahren bereits zu verzeichnenden steigenden Außentemperaturen Auswirkungen auf die öffentliche Trinkwasserversorgung zu befürchten. Insbesondere aufgrund einer zunehmenden Erwärmung der Bodenzonen in den Sommermonaten, vor allem während lang anhaltender Hitzeperioden, ist ein zunehmender Anstieg der Kaltwassertemperaturen im öffentlichen Trinkwassernetz und somit auch der Temperaturen des den Trinkwasserbehandlungsanlagen bereitgestellten Frischwassers zu erwarten. Es ist insbesondere davon auszugehen, dass Bereiche mit geringer Strömung oder stagnierende Bereiche stärker von erhöhten Außentemperaturen betroffen sein werden und hierdurch eine stärkere Erhöhung der Wassertemperatur verzeichnen werden. Die genauen Auswirkungen von höheren Temperaturen auf die Wasserqualität sind derzeit noch nicht bekannt. Es ist jedoch davon auszugehen, dass bei entsprechend hohen Temperaturwerten Qualitätsverluste und mikrobielle Beeinträchtigungen des Trinkwassers auftreten.

Die Temperaturen, die für einen Benutzer an einer Zapfstelle bzw. einem Verbraucher bereitgestelltes kaltes Trinkwasser aufweisen soll, sind auch in technischen DIN- und DVGW-Normen vorgegeben. So ist beispielsweise durch DIN 1988-200 vorgegeben, dass bereitgestelltes kaltes Trinkwasser eine vorgegebene Temperatur, speziell eine Temperatur von 25 °C bei einem bestimmungsgemäßen Betrieb einer Wasserbehandlungsanlage 30 Sekunden nach dem vollen Öffnen einer Entnahmestelle nicht übersteigen darf. Messungen zeigen jedoch bereits heute, dass Wassertemperaturen von 25 °C und mehr in Trinkwasserleitungsnetzen vereinzelt auftreten, wodurch diese Anforderungen zumindest zeitweise nicht eingehalten werden können.

Neben hohen Temperaturen des aus dem öffentlichen Trinkwasserleitungsnetz bereitgestellten Kaltwassers können insbesondere auch hohe Temperaturen in der Umgebung von Wasserbehandlungsanlagen, speziell hohe Temperaturen in Räumen in denen Wasserbehandlungsanlagen installiert sind, zu hohen Temperaturen des bereitzustellenden Trinkwassers führen und die Qualität des an einen Verbraucher abgegebenen Wassers sowie möglicherweise die Hygiene in der Wasserbehandlungsanlage beinträchtigen. Dies gilt speziell in den Sommermonaten, in denen durch die hohen Außentemperaturen ein starkes Aufheizen der Innenräume und somit auch der Wasserbehandlungsanlagen bzw. der Zuleitungen zu diesen erfolgt. Erst bei einem Nachfließen von Roh- bzw. Frischwasser aus dem öffentlichem Trinkwassernetz gleicht sich die Temperatur des Wassers in der Anlage dann üblicherweise wieder asymptotisch der Temperatur des nachfließenden Rohwassers an. Das aus dem öffentlichen Trinkwassernetz stammende, üblicherweise nährstoffarme Wasser kann infolge des genannten Aufheizens beispielsweise mehr Nährstoffe, die von Werkstoffen der Trinkwasserbehandlungsanlage oder von Werkstoffen der Zuleitungen abgegeben werden, aufnehmen, wodurch sich in dem Wasser enthaltene Mikroorganismen, wie z.B. Keime, Viren und Bakterien, in ungewolltem Maß vermehren können. Insbesondere in den Ruhe- bzw. Stand-by-Phasen einer Wasserbehandlungsanlage, d.h. in den Phasen in denen kein Wasser durch die Wasserbehandlungsanlage strömt, erfolgt ein entsprechendes Erwärmen des in oder vor der Wasserbehandlungsanlage stagnierenden Wassers, wodurch eine zunehmende Vermehrung von Mikroorganismen in dem Wasser begünstigt wird.

Eine Berücksichtigung steigender Wassertemperaturen des aus dem öffentlichen Trinkwassernetz bereitgestellten kalten Rohwasser sowie eine Berücksichtigung hoher Raumtemperaturen und einer daraus resultierenden Erwärmung des kalten Wassers, dass sich in oder bei einer Wasserbehandlungsanlage befindet, insbesondere dort zeitweise stagniert, erfolgt bei der Steuerung von aus dem Stand der Technik bekannten Trinkwasserbehandlungsanlagen bislang nicht.

Es besteht daher die Aufgabe, eine Steuereinrichtung zur Steuerung einer Trinkwasserbehandlungsanlage bereitzustellen, die derart eingerichtet ist, dass durch die Trinkwasserbehandlungsanlage auch bei höheren Temperaturen des aus einem öffentlichen Trinkwassernetz bereitgestellten Wassers und/oder bei hohen Umgebungstemperaturen Trinkwasser mit einer möglichst hohen Qualität bereitgestellt wird. Weiter soll ein entsprechendes Verfahren zur Steuerung einer Trinkwasseranlage bereitgestellt werden.

Gelöst wird diese Aufgabe mit einer Steuereinrichtung nach Anspruch 1 sowie einem Verfahren nach Anspruch 15. Vorteilhafte Ausgestaltungen und zweckmäßige Weiterbildungen der Erfindung sind den Unteransprüchen entnehmbar.

Gegenstand der Erfindung ist eine Steuereinrichtung zur Steuerung einer Trinkwasserbehandlungsanlage die zumindest eine Wasserbehandlungseinrichtung, beispielsweise eine Enthärtungsanlage und/oder eine Filteranlage, einen Eingang bzw. Zulauf zum Einleiten von Wasser in die Trinkwasserbehandlungsanlage bzw. die Wasserbehandlungseinrichtung und einen Ausgang bzw. Auslass zum Ausleiten von behandeltem Wasser aus der Trinkwasserbehandlungsanlage aufweist. Die Trinkwasserbehandlungsanlage ist dabei zumindest in einem Wasserbehandlungsmodus, in dem Wasser vom Eingang durch die Trinkwasserbehandlungsanlage zum Ausgang geleitet und das Wasser dabei in der Wasserbehandlungseinrichtung behandelt wird und einem Reinigungsmodus, in dem die Wasserbehandlungseinrichtung zumindest gespült und/oder desinfiziert wird, betreibbar. Es ist auch denkbar, dass die Trinkwasserbehandlungsanlage neben den genannten Modi auch noch weitere Betriebsmodi, wie beispielsweise einen separaten Regeneriermodus zur Regenerierung von (regenerierbaren) Wasserbehandlungsmitteln der Wasserbehandlungseinrichtung, aufweist. Über die Steuereinrichtung kann die Trinkwasserbehandlungsanlage zur Einstellung des jeweiligen Betriebsmodus angesteuert werden. Beispielsweise kann die Steuereinrichtung dabei zur Ansteuerung von entsprechend ausgebildeten Steuerventilen, beispielsweise gegeneinander beweglichen Steuerscheiben, die den Durchfluss bzw. Volumenstrom des Wassers und/oder eines Reinigungsmittels durch die Wasserbehandlungseinrichtung steuern, eingerichtet sein. Das Betreiben der Trinkwasserbehandlungsanlage in den einzelnen Betriebsmodi, beispielsweise in dem Wasserbehandlungsmodus, kann dabei auch noch von weiteren mit der Trinkwasserbehandlungsanlage verbundenen Einrichtungen abhängen. Beispielsweise kann der Wasserbehandlungsmodus und somit das Leiten von Wasser durch die Wasserbehandlungseinrichtung von einem Öffnen und Schließen einer der Trinkwasserbehandlungsanlage nachgelagerten Zapfstelle durch einen Benutzer, z.B. von dem Öffnen und Schließen eines Wasserhahns, abhängen. In den Phasen, in denen der Wasserhahn geschlossen ist, kann sich die Trinkwasserbehandlungsanlage bzw. die Wasserbehandlungseinrichtung in einem sogenannten Stand-by-Zustand befinden. Zur Steuerung der Trinkwasserbehandlungsanlage bzw. Wasserbehandlungseinrichtung eingesetzte Steuerventile oder Steuerscheiben weisen dabei bevorzugt dieselbe Einstellung auf, die auch für den Wasserbehandlungsmodus vorgesehen ist, so dass die Wasserbehandlungseinrichtung bei Öffnen des Wasserhahns unmittelbar zur Behandlung des Wassers bereitsteht.

Um einen ordnungsgemäßen Betrieb der Trinkwasserbehandlungsanlage zu gewährleisten, insbesondere um dauerhaft eine vorgesehene Behandlung des Wassers und die Bereitstellung von behandeltem Wasser mit hoher Qualität zu erzielen, ist die Steuereinrichtung zu einer durch einen vorgegebenen Reinigungsparameter bestimmten, regelmäßigen Einleitung des Reinigungsmodus eingerichtet.

Die erfindungsgemäße Trinkwasserbehandlungsanlage zeichnet sich dadurch aus, dass diese zumindest einen Temperatursensor zur Erfassung der Wassertemperatur vor und/oder in der Wasserbehandlungseinrichtung aufweist und die Steuereinrichtung dazu eingerichtet ist,
a) den Reinigungsparameter zu ändern, wenn die durch den zumindest einen Temperatursensor erfasste Wassertemperatur eine festgelegte Grenztemperatur übersteigt, und/oder
b) den Reinigungsmodus unmittelbar und insbesondere unabhängig vom vorgegebenen Reinigungsparameter einzuleiten, wenn die durch den zumindest einen Temperatursensor erfasste Wassertemperatur eine festgelegte Grenztemperatur übersteigt.

In einer vorteilhaften Ausgestaltung kann die Steuereinrichtung insbesondere auch zur Steuerung nur gemäß Variante a) oder zur Steuerung nur gemäß Variante b) eingerichtet sein.

Bei der Erfassung der Wassertemperatur vor der Wasserbehandlungseinrichtung kann es sich insbesondere um die Erfassung der Wassertemperatur in den zur Wasserbehandlungseinrichtung führenden Zuleitungen handeln.

In einer vorteilhaften Ausgestaltung handelt es sich bei der Grenztemperatur um eine Temperatur im Bereich zwischen 20 °C und 30 °C, bevorzugt zwischen 23 °C und 27 °C, und besonders bevorzugt um eine Grenztemperatur von etwa 25 °C. Oberhalb der genannten Grenztemperaturen sind negative Auswirkungen auf die Qualität des durch die Trinkwasserbehandlungsanlage bereitgestellten bzw. an einen nachgelagerten Verbraucher zugeführten Wassers zu erwarten, so dass auf eine derartige Temperatur durch entsprechendes Durchführen des Reinigungsmodus bzw. Anpassung des die Einleitung dieses bestimmenden Reinigungsparameters reagiert werden muss.

Bei der Erfassung der Wassertemperatur ist es denkbar, dass sehr kurze Temperaturschwankungen, d.h. ein Übersteigen der Grenztemperatur für einen nur sehr kurzen Zeitraum, beispielsweise ein Übersteigen von 1 bis 5 Sekunden, unberücksichtigt bleiben. Hierdurch bleiben insbesondere auch kurzzeitige Messfehler der Temperatursensoren, die ansonsten ein unnötiges Einleiten des Reinigungsmodus oder Anpassen des Reinigungsparameters bewirken würden, unberücksichtigt.

Durch eine Änderung des Reinigungsparameters gemäß Variante a), speziell eine Änderung des Reinigungsparameters dahingehend, dass die Einleitung des Reinigungsmodus früher bzw. häufiger erfolgt, kann erhöhten Temperaturen des aus der Trinkwasserbehandlungsanlage bereitgestellten oder in der Trinkwasserbehandlungsanlage befindlichen Wassers und einer damit verbundenen negativen Auswirkung auf die Qualität des durch die Trinkwasserbehandlungsanlage gelieferten behandelten Wassers entgegengewirkt werden. Insbesondere wird dadurch das Eintreten von Zuständen, die die Wasserqualität beeinträchtigen, wie beispielsweise ein Übermaß von sich in der Wasserbehandlungseinrichtung ansammelnden Mikroorganismen oder sonstigen Verunreinigungen, verhindert.

Entsprechend hierzu kann durch ein außerplanmäßiges Einleiten des Reinigungsmodus gemäß Variante b) eine Beeinträchtigung des durch die Wasserbehandlungseinrichtung behandelten und durch die Trinkwasserbehandlungsanlage bereitgestellten Wassers verhindert werden. Eine Steuerung gemäß Variante b) ist beispielsweise in den Fällen relevant, in denen Wasser in oder vor der Wasserbehandlungseinrichtung stagniert und sich durch erhöhte Temperaturen des Raums, in dem sich die Trinkwasserbehandlungsanlage befindet, aufheizt. In diesem stagnierenden erwärmten Wasser ist die Gefahr der Ausbildung von Verunreinigungen, die die Qualität des Wassers beeinträchtigen können, beispielsweise eine erhöhte Vermehrung von Mikroorganismen, besonders hoch. Eine Stagnation des Wassers in oder vor der Wasserbehandlungseinrichtung ist beispielsweise dann gegeben, wenn kein Bedarf der Zuleitung von Wasser zu einer der Trinkwasserbehandlungsanlage nachgelagerten Zapfstelle besteht. Insbesondere in Fällen, in denen ein Benutzer über längere Zeit nicht zu Hause ist, beispielsweise, weil dieser in der Arbeit oder verreist ist, sind lange Stagnationszeiten gegeben, wodurch ein hohes Risiko einer zu starken Erwärmung des in oder vor der Wasserbehandlungseinrichtung stagnierenden Wassers besteht.

Bei dem die Einleitung des Reinigungsmodus bestimmenden Reinigungsparameter kann es sich in einer vorteilhaften Ausgestaltung um ein Zeitintervall zwischen zwei aufeinanderfolgenden Reinigungsmodi handeln. Speziell kann das Zeitintervall dabei im Normalbetrieb im Bereich von 4 bis 120 Stunden, bevorzugt im Bereich von 24 bis 96 Stunden, besonders bevorzugt im Bereich von 24 bis 72 Stunden liegen. Unter dem Normalbetrieb ist dabei der Grund- bzw. Ausgangszustand der Anlage zu verstehen, in dem keine Wassertemperatur oberhalb der Grenztemperatur erfasst wurde bzw. keine vorangehende Anpassung des Reinigungsparameters infolge einer erfassten, die festgelegte Grenztemperatur übersteigenden Temperatur erfolgt ist. Alternativ hierzu kann es sich bei dem Reinigungsparameter auch um ein vorgegebenes Wasserbehandlungsvolumen von durch die Wasserbehandlungseinrichtung durchgeleitetem Wasser, insbesondere während des Wasserbehandlungsmodus behandeltem Wasser, handeln. Bei diesem vorgegebenen Wasserbehandlungsvolumen kann es sich - bezogen auf den Normalbetrieb - insbesondere um ein Volumen im Bereich von 100 bis 5000 Liter, bevorzugt im Bereich von 200 bis 600 Liter, besonders bevorzugt im Bereich von 200 bis 400 Liter, handeln. In einer denkbaren Ausgestaltung kann der Reinigungsparameter dabei auch sowohl von einem Zeitintervall als auch von einem Wasserbehandlungsvolumen abhängigen. Beispielsweise kann der Reinigungsmodus entweder nach Ablauf des Zeitintervalls oder nach erfolgter Behandlung des vorgegebenen Volumens, je nachdem welches Kriterium zuerst erfüllt ist, eingeleitet werden. Bei der in Variante a) beschriebenen Änderung des Reinigungsparameters handelt es sich vorzugsweise um eine Verkürzung des Zeitintervalls und/oder eine Verringerung des Wasserbehandlungsvolumens, so dass eine häufigere Einleitung des Reinigungsmodus erfolgt und somit eine hohe Qualität des behandelten Wassers gewährleistet ist. In einer bevorzugten Ausgestaltung erfolgt die Verkürzung des Zeitintervalls bzw. die Verringerung des Wasserbehandlungsvolumens dabei in Abhängigkeit der Höhe des durch den zumindest einen Temperatursensor erfassten Temperaturwerts, speziell in Abhängigkeit des die Grenztemperatur übersteigenden Werts. Je höher dabei der erfasste Temperaturwert ist, umso stärker wird das Zeitintervall verkürzt bzw. das Wasserbehandlungsvolumen verringert. Hierdurch wird höheren Wassertemperaturen und den damit verbundenen stärkeren Auswirkungen auf die Wasserqualität, entsprechend Rechnung getragen.

Für eine Anpassung gemäß Variante a) ist es vorteilhaft, die Ursache einer erhöhten Wassertemperatur zu kennen und zu berücksichtigen. Insbesondere ist es vorteilhaft, wenn bei der Änderung des Reinigungsparameters berücksichtigt wird, ob bereits durch das öffentliche Trinkwassernetz Wasser mit einer erhöhten Temperatur, insbesondere einer die Grenztemperatur überschreitenden Temperatur, zugeführt wird oder ob das Überschreiten der Grenztemperatur auf einem Erhitzen infolge einer erhöhten Temperatur des Raums, in dem sich die Trinkwasserbehandlungsanlage befindet, insbesondere infolge einer länger anhaltende Stagnation von Wasser in oder vor der Wasserbehandlungseinrichtung, beruht. Beispielsweise könnte bei einer zu hohen Temperatur des durch das öffentliche Trinkwassernetz bereitgestellten Wassers eine andere Anpassung des Reinigungsparameters, beispielsweise eine stärkere oder weniger starke Verkürzung des Zeitintervalls oder eine geringere oder größere Verringerung des Wasserbehandlungsvolumens, erfolgen, als dies bei einer auf einer erhöhten Raumtemperatur zurückzuführenden Erhitzung des Wassers der Fall ist. Hierfür wäre es zum einen denkbar, dass die Änderung des Reinigungsparameters gemäß Variante a) unter Berücksichtigung eines separat erfassten oder extern bereitgestellten Temperaturwerts des aus dem öffentlichen Trinkwassernetz zugeführten Wassers, beispielsweise eines durch den Betreiber des öffentlichen Trinkwassernetzes bereitgestellten Temperaturwerts, erfolgt. Die genannten Temperaturwerte sind allerdings in der Regel nicht oder nur schwer zu erhalten. Deshalb ist in einer ersten vorteilhaften Einrichtung der Steuereinrichtung zur Berücksichtigung der Ursache einer erhöhten Wassertemperatur vorgesehen, dass eine Änderung des Reinigungsparameters gemäß Variante a) in Abhängigkeit davon erfolgt, ob die erfasste Wassertemperatur während einer vorgegebenen Behandlungsdauer im Wasserbehandlungsmodus, also einer Zeitdauer während der Wasser durch die Wasserbehandlungseinrichtung fließt und von dieser behandelt wird, die Grenztemperatur wieder unterschreitet oder eben nicht. Die Behandlungsdauer kann dabei beispielsweise im Bereich von 0 bis 120 Sekunden, bevorzugt im Bereich vom 0 bis 60 Sekunden, besonders bevorzugt im Bereich von 0 bis 40 Sekunden liegen. In einer ganz besonders bevorzugten Ausgestaltung kann es sich um eine Behandlungsdauer von etwa 30 Sekunden handeln. Nach der genannten Behandlungsdauer ist ein gegebenenfalls zuvor in oder vor der Wasserbehandlungseinrichtung stagnierendes Wasser durch nachströmendes Wasser zumindest größtenteils verdrängt, so dass sich die Wassertemperatur im Wesentlichen an die Temperatur des aus dem öffentlichen Trinkwassernetz bereitgestellten Wassers angeglichen hat. Hierdurch kann auf einfache Weise auf die Ursache für die erhöhte Wassertemperatur, d.h. eine zu hohe Temperatur des aus dem öffentlichen Trinkwassernetz bereitgestellten Wassers oder eine nachträgliche Erwärmung infolge hoher Raumtemperaturen, geschlossen werden.

Anstelle oder ggf. ergänzenden zu der genannten Änderung des Reinigungsparameters in Abhängigkeit der Behandlungsdauer ist gemäß einer zweiten Einrichtung der Steuereinrichtung vorgesehen, eine Änderung des Reinigungsparameters in Abhängigkeit davon vorzunehmen, ob die erfasste Wassertemperatur bei Durchleiten eines vorgegebenen Volumens an Wasser durch die Wasserbehandlungseinrichtung die Grenztemperatur wieder unterschreitet oder eben nicht. Bei dem vorgegebenen Volumen an Wasser kann es sich beispielsweise um mehr als ein, zwei oder drei Liter, oder, je nach Anlage, auch um noch mehr Liter handeln. Auch in dieser Ausgestaltung ist in oder vor der Wasserbehandlungseinrichtung stagnierendes Wasser durch nachströmendes Wasser zumindest größtenteils verdrängt worden, so dass sich die Wassertemperatur zumindest im Wesentlichen an die Temperatur des aus dem öffentlichen Trinkwassernetz bereitgestellten Wassers angeglichen hat. Gemäß einer dritten Einrichtung der Steuereinrichtung ist es auch denkbar, die Änderung gemäß Variante a) in Abhängigkeit davon vorzunehmen, ob eine während des Wasserbehandlungsmodus erreichte, im Wesentlichen konstante Wassertemperatur oberhalb der Grenztemperatur liegt. Die Wassertemperatur kann dabei in einer zweckmäßigen Ausgestaltung als konstant angesehen werden, wenn sich die erfasste Temperatur um weniger als 0,5 °C, bevorzugt um weniger als 0,3 °C, ganz bevorzugt um weniger als 0,1 °C pro Liter an durch die Trinkwasserbehandlungsanlage bzw. die Wasserbehandlungseinrichtung geleitetem Wasser ändert.

Bei einer bevorzugten Einrichtung der Steuereinrichtung ist es denkbar, dass eine Anpassung des Reinigungsmodus gemäß Variante a) erst dann erfolgt, wenn die erfasste Wassertemperatur die Grenztemperatur über eine vorgegebene Dauer übersteigt, bevorzugt eine vorgegebene Dauer zwischen 1 und 10 Stunden, besonders bevorzugt zwischen 2 und 8 Stunden, ganz besonders bevorzugt zwischen 3 und 6 Stunden. Hierdurch ist zum einen gewährleistet, dass nicht bei jedem kurzzeitigen Überschreiten der Grenztemperatur eine Anpassung des Reinigungsparameters erfolgt. Weiter bleiben hierbei kurzzeitige Temperaturschwankungen und speziell ein kurzzeitiges Überschreiten der Grenztemperatur, die keinen nennenswerten oder einen noch akzeptablen Einfluss auf die Wasserqualität haben, unberücksichtigt. Insbesondere ist es weiter auch denkbar, dass der Reinigungsparameter wieder auf seinen Ausgangs- bzw. Normalwert geändert wird, wenn ein Überschreiten der Grenztemperatur seit einer vorgegebenen Dauer, bevorzugt einer vorgegebenen Dauer zwischen 1 und 10 Stunden, besonders bevorzugt zwischen 2 und 8 Stunden, ganz besonders bevorzugt zwischen 3 und 6 Stunden, nicht mehr erfasst wurde.

Wie bereits beschrieben kann die Trinkwasserbehandlungsanlage in einer bevorzugten Ausgestaltung einen Standby-Modus aufweisen bzw. in diesem betreibbar sein, in dem insbesondere kein Leiten von Wasser in oder durch die Wasserbehandlungseinrichtung erfolgt. Bei dem Stand-by-Modus handelt es sich speziell um einen Zustand, in dem die Trinkwasserbehandlungsanlage und die Wasserbehandlungseinrichtung zu einer Wasserbehandlung bereitstehen und lediglich auf eine das Durchleiten und Behandeln von Wasser bestimmende Abnahme von Wasser durch eine Zapfstelle warten. Wie bereits erwähnt, kann ein durch die Steuereinrichtung gesteuertes Steuerventil bzw. eine Steuerscheibe in dem Stand-by-Modus dieselbe Stellung aufweisen wie in dem Wasserbehandlungsmodus. Es ist jedoch grundsätzlich auch eine Ausgestaltung denkbar, in der das Steuerventil bzw. die Steuerscheibe in dem Stand-by-Modus eine andere Stellung aufweist, so dass für das Betreiben der Wasserbehandlungseinrichtung im Wasserbehandlungsmodus noch ein Umschalten des Steuerventils erforderlich ist. Nachdem in dem Stand-by-Modus kein Durchleiten von Wasser durch die Trinkwasserbehandlungsanlage erfolgt, ist eine Erwärmung des in und vor der Trinkwasserbehandlungsanlage stagnierenden Wassers im Wesentlichen auf die Temperatur des Raums, in dem die Trinkwasserbehandlungsanlage aufgestellt ist, zurückzuführen. In einer vorteilhaften Ausgestaltung ist es daher denkbar, dass die Einleitung des Reinigungsmodus gemäß Variante b) in Abhängigkeit davon und beispielsweise auch nur dann erfolgt, wenn ein Übersteigen der Grenztemperatur während des Standby-Modus bzw. während des Betreibens der Anlage im Stand-by-Modus erfasst wird. Insbesondere kann hierbei auch berücksichtigt werden, wie lange sich die Anlage bereits im Stand-by-Modus befindet. Beispielsweise kann die Einleitung des Reinigungsmodus gemäß Variante b) nur dann vorgenommen werden, wenn der Stand-by-Modus seit mehr als 1 bis 10 Stunden, insbesondere 2 bis 5 Stunden, besteht. Durch die genannte Abhängigkeit der Variante b) von dem Stand-by-Modus erfolgt die Einleitung des Reinigungsmodus speziell in dem Fall, in dem eine Erhöhung der Wassertemperatur auf eine erhöhte Raumtemperatur zurückzuführen ist. Eine gleichzeitig auftretende zu hohe Temperatur des aus dem öffentlichen Trinkwassernetz bereitgestellten Wassers kann auf anderem Wege, beispielsweise durch eine Steuerung gemäß Variante a), berücksichtigt werden.

Bei einer bevorzugten Einrichtung der Steuereinrichtung erfolgt eine Einleitung des Reinigungsmodus gemäß Variante b) erst dann, wenn die erfasste Wassertemperatur die Grenztemperatur über eine vorgegebene Dauer übersteigt, bevorzugt eine vorgegebene Dauer zwischen 1 und 10 Stunden, besonders bevorzugt zwischen 2 und 8 Stunden, ganz besonders bevorzugt zwischen 3 und 6 Stunden. Hierdurch ist zum einen gewährleistet, dass nicht bei jedem kurzzeitigen Überschreiten der Grenztemperatur die Einleitung des Reinigungsmodus erfolgt. Weiter bleiben hierbei kurzzeitige Temperaturschwankungen und speziell ein kurzzeitiges Überschreiten der Grenztemperatur, die keinen nennenswerten oder einen noch akzeptablen Einfluss auf die Wasserqualität haben, unberücksichtigt.

In einer weiteren vorteilhaften Ausgestaltung erfolgt die Einleitung des Reinigungsmodus gemäß Variante b) unter Berücksichtigung der letztmaligen Durchführung des Reinigungsmodus. In einer bevorzugten Variante erfolgt die Einleitung des Reinigungsmodus gemäß Variante b) beispielsweise nur dann, wenn seit der letzten Durchführung des Reinigungsmodus eine vorgegebene Mindestzeit vergangen ist, insbesondere eine Mindestzeit im Bereich von etwa 1 bis 120 Stunden, bevorzugt im Bereich von etwa 1 bis 24 Stunden, besonders bevorzugt im Bereich von etwa 2 bis 10 Stunden, ganz besonders bevorzugt im Bereich von etwa 3 bis 6 Stunden. Alternativ hierzu wird der Reinigungsmodus in einer weiteren bevorzugten Variante gemäß Variante b) erst dann eingeleitet, wenn seit der letzten Durchführung des Reinigungsmodus ein vorgegebenes Mindestvolumen an Wasser durch die Wasserbehandlungseinrichtung durchgeleitet wurde, insbesondere ein Volumen von mehr als drei Litern, bevorzugt von mehr als fünf Litern. Durch die beschriebene Berücksichtigung der letztmaligen Durchführung des Reinigungsmodus wird eine für die Gewährleistung einer ausreichenden Wasserqualität unnötige, frühzeitige Einleitung und Durchführung des Reinigungsmodus verhindert.

In einer weiteren Ausgestaltung ist es denkbar, dass die Trinkwasserbehandlungsanlage sowohl einen ersten Temperatursensor zur Erfassung der Wassertemperatur vor der Wasserbehandlungseinrichtung als auch einen zweiten Temperatursensor zur Erfassung der Wassertemperatur in der Wasserbehandlungseinrichtung aufweist. Insbesondere ist es denkbar, dass die erfassten Temperaturen beider Temperatursensoren für die Steuerung der Trinkwasserbehandlungsanlage gemäß Variante a) und/oder b) berücksichtigt werden. Beispielsweise ist es denkbar, dass die Ansteuerung gemäß Variante a) und/oder b) in Abhängigkeit davon oder auch nur dann erfolgen, wenn genau einer oder wenn beide Temperatursensoren ein Überschreiten der Grenztemperatur erfassen. Hierdurch kann möglicherweise besonderen Gegebenheiten bei der Aufheizung vor oder in der Wasserbehandlungseinrichtung entsprechend Rechnung getragen werden.

Der Reinigungsmodus umfasst in einer vorteilhaften Ausgestaltung ein Desinfizieren der Wasserbehandlungseinrichtung durch Einleiten eines Desinfektionsmittels in die Wasserbehandlungseinrichtung, insbesondere gefolgt von einem Ausleiten des Desinfektionsmittels nach erfolgter Desinfektion in einen Ausfluss der Trinkwasserbehandlungsanlage bzw. über einen Abfluss der Trinkwasserbehandlungsanlage, insbesondere in einen mit dem Abfluss verbindbaren bzw. verbundenen Abwasserkanal. Beispielsweise kann es sich bei dem Desinfektionsmittel um ein chlorhaltiges Desinfektionsmittel handeln. Bei dem Desinfektionsmittel kann es sich insbesondere auch, wie eingangs ausgeführt, um ein Regeneriermittel handeln, welches beispielsweise in der Lage ist, erschöpftes Ionenaustauscherharz einer Wasserenthärtungseinrichtung und/oder das Filtermaterial eines Keimfilters zu regenerieren. Durch das Desinfizieren der Wasserbehandlungseinrichtung werden insbesondere die Wasserqualität beeinträchtigende Mikroorganismen abgetötet und/oder abgelöst.

In einer weiteren vorteilhaften Ausgestaltung umfasst der Reinigungsmodus ein Spülen der Wasserbehandlungseinrichtung durch Einleiten einer Spülflüssigkeit und/oder Wasser in die Wasserbehandlungseinrichtung, insbesondere verbunden mit einem anschließenden Ausleiten der Spülflüssigkeit bzw. des Wassers in einen Ausfluss der Trinkwasserbehandlungsanlage bzw. über einen Abfluss der Trinkwasserbehandlungsanlage, insbesondere in einen mit dem Abfluss verbindbaren bzw. verbundenen Abwasserkanal. Bevorzugt wird dabei ein vorgegebenes Volumen der Spülflüssigkeit bzw. von Wasser in die Wasserbehandlungseinrichtung eingeleitet. Ein Einleiten von Wasser erfolgt dabei vorzugsweise zumindest solange, bis ein Unterschreiten eines vorgegebenen Temperaturschwellwerts, beispielsweise der Grenztemperatur oder einer Temperatur unterhalb der Grenztemperatur, durch den zumindest einen Temperatursensor erfasst wird und/oder bis durch den zumindest einen Temperatursensor eine im Wesentlichen konstante Wassertemperatur erfasst wird. Durch das Spülen der Wasserbehandlungseinrichtung kann insbesondere zu stark erwärmtes Wasser, dass in oder vor der Wasserbehandlungseinrichtung über eine längere Zeit stagnierte und hierdurch unter Umständen eine erhöhte Anzahl an Mikroorganismen aufweist, aus der Trinkwasserbehandlungsanlage ausgespült werden.

Die Trinkwasserbehandlungsanlage ist in einer bevorzugten Ausgestaltung als Enthärtungsanlage ausgebildet, durch die insbesondere im Wasser gelöste, härtebildende Erdalkali-Kationen des Kalziums und des Magnesiums durch einen Ionenaustauscher zumindest teilweise aus dem Wasser an diesem abgeschieden werden. Die Wasserbehandlungseinrichtung enthält dabei bevorzugt regenerierbare Wasserbehandlungsmittel, die im Reinigungsmodus und/oder durch einen zusätzlichen Regeneriermodus regeneriert werden können. Mit der Regeneration der Wasserbehandlungsmittel kann dabei insbesondere auch eine Desinfektion der Wasserbehandlungseinrichtung verbunden sein.

Alternativ oder ergänzend zu der Ausgestaltung als Enthärtungsanlage kann die Trinkwasserbehandlungsanlage eine Filtereinheit aufweisen bzw. als Filteranlage ausgebildet sein. Die Wasserbehandlungseinrichtung enthält hierbei ein Filtermaterial oder ein Ionenaustauschermaterial, insbesondere ein im Reinigungsmodus und/oder in einem zusätzlichen Regeneriermodus regenerierbares Filtermaterial oder Ionenaustauschermaterial. Bei dem Filtermaterial kann es sich beispielsweise um ein solches mit einem in wässriger Umgebung, insbesondere im Bereich pH 3 bis pH 8, von Null verschiedenen ZETA-Potential (elektroaktives Filtermaterial) handeln. Ein solches Filtermaterial ist in der Lage Mikroorganismen, die sich im Wasser befinden, durch Elektroadsorption an dem elektroaktiven Filtermaterial zu adsorbieren.

In einer zweckmäßigen Ausgestaltung weist die Trinkwasserbehandlungsanlage einen Strömungssensor, insbesondere einen Durchflußsensor oder einen Wasserzähler, zur Erfassung der Wassermenge, die in die Trinkwasserbehandlungsanlage bzw. in die Wasserbehandlungseinrichtung eingeleitet und/oder durch diese durchgeleitet wird, auf. Der Strömungssensor ermöglicht hierbei insbesondere eine Steuerung der Trinkwasserbehandlungsanlage, speziell die Einleitung des Reinigungsmodus, in Abhängigkeit des durch die Anlage durchgeleite Wasservolumens.

Bevorzugt erfolgt eine kontinuierliche Erfassung der Wassertemperatur durch den zumindest einen Temperatursensor. Ergänzend hierzu kann eine Speicherung der erfassten Wassertemperaturen in einer Datenbank, insbesondere eine Erfassung und/oder Speicherung der erfassten Wassertemperaturen in Verbindung mit der in die Wasserbehandlungseinrichtung eingeleiteten und/oder durch die Wasserbehandlungseinrichtung durchgeleiteten Wassermenge und/oder in Verbindung mit dem jeweiligen Modus der Trinkwasserbehandlungsanlage erfolgen. Diese Erfassung und Speicherung ist zur Dokumentation der jeweiligen Wassertemperatur zweckmäßig, insbesondere auch um auf die Ursache einer erhöhten Wassertemperatur schließen zu können. Dies ist insbesondere auch für den Betreiber der Trinkwasserbehandlungsanlage von Bedeutung, da dieser die Verantwortung für eine bestimmte Wassertemperatur und auch Wasserqualität des aus einer Zapfstelle fließenden Wassers trägt. Durch die genannte Erfassung und Speicherung der Wassertemperaturen kann der Betreiber der Trinkwasserbehandlungsanlage insbesondere nachweisen und gegebenenfalls den Betreibern des öffentlichen Trinkwassernetzes entgegenhalten, dass aus dem öffentlichen Trinkwassernetz (zeitweise) Wasser mit einer zu hohen Temperatur bereitgestellt wurde, das für eine zu hohe Temperatur des aus einem Wasserhahn strömenden Kaltwassers oder die Beeinträchtigung der Wasserqualität (mit-) verantwortlich ist. In einer vorteilhaften Ausgestaltung erfolgt hierfür zumindest eine Speicherung der in dem Wasserbehandlungsmodus erfassten Wassertemperatur nach Durchleiten eines vorgegebenen Mindestvolumens an Wasser und/oder bei Erreichen einer im Wesentlichen konstanten Wassertemperatur. In einer weiteren Ausgestaltung ist insbesondere auch eine Übertragung der erfassten bzw. gespeicherten Daten über eine Internetverbindung an eine zentrale Datenbank des Betreibers der Trinkwasserbehandlungsanlage denkbar.

In einer weiteren vorteilhaften Ausgestaltung ist die Steuereinrichtung dazu eingerichtet, bei Unterschreiten einer vorgegebenen kritischen Temperatur, insbesondere einer kritischen Temperatur kleiner als 10 °C, bevorzugt kleiner als 6 °C, besonders bevorzugt kleiner als 4 °C, ein Warnsignal auszugeben. Ergänzend oder alternativ hierzu kann die Steuereinrichtung dazu eingerichtet sein, bei Unterschreiten der kritischen Temperatur Wasser und/oder eine Spülflüssigkeit vom Eingang zu einem Abfluss der Trinkwasserbehandlungsanlage durchzuleiten, insbesondere bis eine vorgegebene Mindesttemperatur erfasst wird, beispielsweise eine Mindesttemperatur größer oder gleich 4 °C, 6 °C oder 10°C. Durch die genannte Ausgestaltung ist ein Schutz der Anlage vor Schäden infolge von zu tiefen Temperaturen und insbesondere Schäden infolge von Frost gegeben.

Gegenstand der Erfindung ist weiter ein entsprechendes Verfahren zur Steuerung bzw. zum Betreiben einer oben in Bezug auf die Steuereinrichtung beschriebenen Trinkwasserbehandlungsanlage. Die Trinkwasserbehandlungsanlage weist dabei zumindest eine Wasserbehandlungseinrichtung, einen Eingang zum Einleiten von Wasser in die Wasserbehandlungseinrichtung und einen Ausgang zum Ausleiten von behandeltem Wasser aus der Trinkwasserbehandlungsanlage auf. Die Trinkwasserbehandlungsanlage ist weiter zumindest in einem Wasserbehandlungsmodus, in dem Wasser vom Eingang durch die Trinkwasserbehandlungsanlage zum Ausgang geleitet und das Wasser dabei in der Wasserbehandlungseinrichtung behandelt wird, und einem Reinigungsmodus, in dem die Wasserbehandlungseinrichtung desinfiziert und/oder gespült wird, betreibbar bzw. wird in mindestens den beiden genannten Modi betrieben, wobei ein durch einen vorgegebenen Reinigungsparameter bestimmtes, regelmäßiges Einleiten des Reinigungsmodus erfolgt. Weiter umfasst die Trinkwasserbehandlungsanlage zumindest einen Temperatursensor zur Erfassung der Wassertemperatur vor und/oder in der Wasserbehandlungseinrichtung. Das Verfahren umfasst dabei insbesondere die Schritte zur Ausführung der oben in Bezug auf die Steuereinrichtung beschriebenen Steuerung der Trinkwasserbehandlungsanlage. Insbesondere umfasst das Verfahren umfasst dabei zumindest den Schritt
a) einer Änderung des Reinigungsparameters, wenn die durch den zumindest einen Temperatursensor erfasste Wassertemperatur eine festgelegte Grenztemperatur übersteigt,
   und/oder einen Schritt
b) der Einleitung des Reinigungsmodus unmittelbar und insbesondere unabhängig vom vorgegebenen Reinigungsparameter, wenn die durch den zumindest einen Temperatursensor erfasste Wassertemperatur eine festgelegte Grenztemperatur übersteigt.

Weiter kann das Verfahren entsprechend zur Steuerung bzw. zum Betreiben der Trinkwasserbehandlungsanlage analog zu einer oder mehreren der oben in Bezug auf die Steuereinrichtung beschriebenen vorteilhaften Steuerungen ausgebildet sein.

Gegenstand der Offenbarung ist weiter eine Trinkwasserbehandlungsanlage mit einer oben beschriebenen Steuereinrichtung. Die Trinkwasserbehandlungsanlage weist dabei eine entsprechende, oben in Verbindung mit der Steuereinrichtung beschriebene Ausgestaltung auf. Insbesondere weist die Trinkwasserbehandlungsanlage eine Wasserbehandlungseinrichtung, einen Eingang zum Einleiten von Wasser in die Wasserbehandlungseinrichtung, einen Ausgang zum Ausleiten von behandeltem Wasser aus der Trinkwasserbehandlungsanlage sowie zumindest einen Temperatursensor zur Erfassung der Wassertemperatur vor und/oder in der Wasserbehandlungseinrichtung auf.

Diese und weitere Merkmale sowie Vorteile und Wirkungen der erfindungsgemäßen Steuereinrichtung sowie des erfindungsgemäßen Verfahrens zur Steuerung einer Trinkwasserbehandlungsanlage ergeben sich aus dem nachfolgenden unter Bezugnahme auf die begleitenden Zeichnungen näher beschriebenen Ausführungsbeispiel. Die Zeichnungen zeigen:
- **Fig. 1**: eine schematische Darstellung einer als Wasserenthärtungsanlage ausgeführten Trinkwasserbehandlungsanlage, die in einem Wasserbehandlungsmodus (Enthärtermodus) betrieben wird,
- **Fig. 2**: eine schematische Darstellung einer als Wasserenthärtungsanlage ausgeführten Trinkwasserbehandlungsanlage, die in einem Reinigungsmodus betrieben wird.

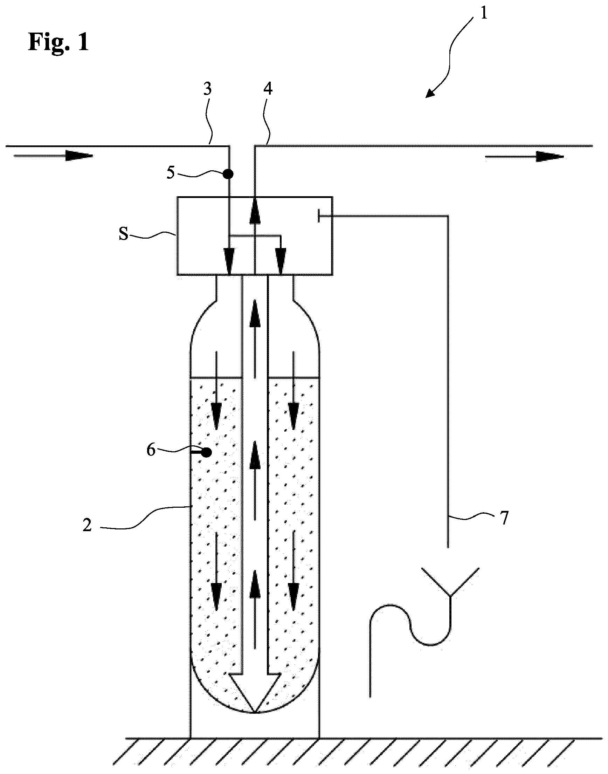

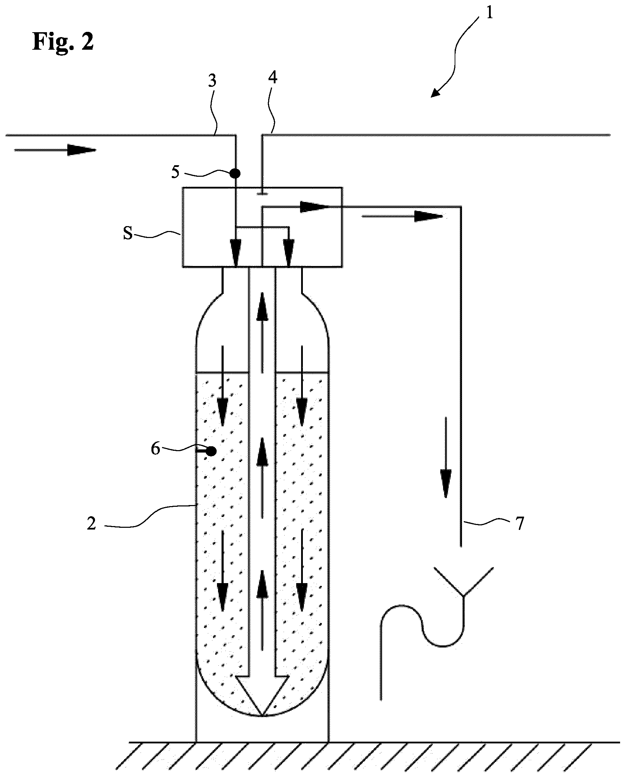

In Fig. 1 und Fig. 2 ist eine als Wasserenthärtungsanlage ausgeführte Trinkwasserbehandlungsanlage 1 gemäß der Erfindung schematisch dargestellt. Die Trinkwasserbehandlungsanlage 1 umfasst dabei eine zur Wasserenthärtung ausgebildete Wasserbehandlungseinrichtung 2 mit regenerierbaren Wasserbehandlungsmitteln, beispielsweise regenerierbaren Ionenaustauschern in Form von Ionenaustauscherharzen.

Fig. 1 zeigt die Trinkwasserbehandlungsanlage 1 in einem Wasserbehandlungsmodus (Enthärtermodus), in dem Wasser aus einem öffentlichen Trinkwassernetz über einen Eingang 3 in die Wasserbehandlungseinrichtung 2 eingeleitet, dort durch die Wasserbehandlungseinrichtung 2 behandelt und anschließend über einen Ausgang 4 der Trinkwasserbehandlungsanlage 1 einer Zapfstelle, beispielsweise einem Wasserhahn, zugeführt wird.

Fig. 2 zeigt die Wasserenthärtungsanlage bzw. die Trinkwasserbehandlungsanlage 1 in einem beispielhaften Reinigungsmodus in dem Wasser von dem Eingang 3 durch die Wasserbehandlungseinrichtung 2 durchgeleitet und anschließend in einen Ausfluss bzw. über einen Abfluss 7 der Trinkwasserbehandlungsanlage 1, speziell in einen mit dem Abfluss 7 verbundenen Abwasserkanal, (aus-) geführt wird.

Neben den beiden in Fig. 1 und Fig. 2 gezeigten Betriebsmodi kann die Trinkwasserbehandlungsanlage 1 selbstverständlich auch weitere Betriebsmodi, beispielsweise einen Stand-by-Modus, in dem kein Durchleiten von Wasser durch die Trinkwasserbehandlungsanlage 1 erfolgt, oder einen zusätzlichen Regenerier- oder Desinfektionsmodus, aufweisen.

Zur Steuerung der Trinkwasserbehandlungsanlage 1, insbesondere zur Ansteuerung der einzelnen Betriebsmodi, weist die Trinkwasserbehandlungsanlage 1 eine Steuereinrichtung S auf. Die Steuereinrichtung S enthält ein elektronisches Steuergerät, über welches verschiedene Betriebsmodi der Wasserenthärtungsanlage, beispielsweise durch Ansteuerung eines gegeneinander bewegliche Steuerelemente umfassenden Steuerventils, angesteuert werden können. Die Steuereinrichtung S ist dabei insbesondere zu einer durch einen vorgegebenen Reinigungsparameter bestimmten, regelmäßigen Einleitung des Reinigungsmodus eingerichtet.

Weiter weist die Trinkwasserbehandlungsanlage 1 einen ersten Temperatursensor 5 zur Erfassung der Wassertemperatur in den Zuleitungen vor der Wasserbehandlungseinrichtung 2 sowie einen zweiten Temperatursensor 6 zur Erfassung der Temperatur in der Wasserbehandlungseinrichtung 2 auf.

Die Steuereinrichtung S der beispielhaft skizzierten Trinkwasserbehandlungsanlage 1 ist dabei speziell zur oben beschriebenen, erfindungsgemäßen Steuerung der Trinkwasserbehandlungsanlage 1 unter Berücksichtigung der durch die Temperatursensoren 5, 6 erfassten Wassertemperaturen eingerichtet. Insbesondere ist die Steuereinrichtung S dazu eingerichtet, den Reinigungsparameter zu ändern, wenn die durch zumindest einen Temperatursensor 5, 6 erfasste Wassertemperatur eine festgelegte Grenztemperatur übersteigt, und/oder den Reinigungsmodus unmittelbar und insbesondere unabhängig vom vorgegebenen Reinigungsparameter einzuleiten, wenn die durch zumindest einen Temperatursensor 5, 6 erfasste Wassertemperatur eine festgelegte Grenztemperatur übersteigt. Bezüglich der Varianten der Einrichtung der Steuereinrichtung sowie weiterer Ausgestaltungen und möglicher Bestandteile der Trinkwasserbehandlungsanlage 1 wird, um Wiederholungen zu vermeiden, auf die eingangs gemachten Ausführungen verwiesen. Bezüglich weiterer (möglicher) Ausgestaltungen der Trinkwasserbehandlungsanlage 1, einer denkbaren Ausgestaltung eines Steuerventils und weiteren Betriebsmodi der Trinkwasserbehandlungsanlage 1 wird beispielhaft auch auf die Ausführungen in DE 10 2021 103 911 A1 verwiesen.

### Bezugszeichen

- 1: Trinkwasserbehandlungsanlage
- 2: Wasserbehandlungseinrichtung
- 3: Eingang
- 4: Ausgang
- 5: Erster Temperatursensor
- 6: Zweiter Temperatursensor
- 7: Abfluss
- S: Steuereinrichtung

## Patentansprüche

1. Steuereinrichtung (S) zur Steuerung einer Trinkwasserbehandlungsanlage (1) mit einer Wasserbehandlungseinrichtung (2), einem Eingang (3) zum Einleiten von Wasser in die Wasserbehandlungseinrichtung (2) und einem Ausgang (4) zum Ausleiten von behandeltem Wasser aus der Trinkwasserbehandlungsanlage (1), wobei die Trinkwasserbehandlungsanlage (1) in mindestens einem Wasserbehandlungsmodus, in dem Wasser vom Eingang (3) durch die Trinkwasserbehandlungsanlage (1) zum Ausgang (4) geleitet und das Wasser dabei in der Wasserbehandlungseinrichtung (2) behandelt wird und einem Reinigungsmodus, in dem die Wasserbehandlungseinrichtung (2) desinfiziert und/oder gespült wird, betreibbar ist, wobei die Steuereinrichtung (S) zu einer durch einen vorgegebenen Reinigungsparameter bestimmten, regelmäßigen Einleitung des Reinigungsmodus eingerichtet ist, **dadurch gekennzeichnet, dass** die Trinkwasserbehandlungsanlage (1) zumindest einen Temperatursensor (5, 6) zur Erfassung der Wassertemperatur vor und/oder in der Wasserbehandlungseinrichtung (2) aufweist und die Steuereinrichtung (S) eingerichtet ist,
a) den Reinigungsparameter zu ändern, wenn die durch den zumindest einen Temperatursensor (5, 6) erfasste Wassertemperatur eine festgelegte Grenztemperatur übersteigt,
und/oder
b) den Reinigungsmodus unmittelbar und insbesondere unabhängig vom vorgegebenen Reinigungsparameter einzuleiten, wenn die durch den zumindest einen Temperatursensor (5, 6) erfasste Wassertemperatur eine festgelegte Grenztemperatur übersteigt.

2. Steuereinrichtung (S) nach Anspruch 1, **gekennzeichnet durch** eine Grenztemperatur im Bereich zwischen 20 °C und 30 °C, bevorzugt zwischen 23° C und 27 °C, besonders bevorzugt eine Grenztemperatur von etwa 25 °C.

3. Steuereinrichtung (S) nach einem der vorangehenden Ansprüche, **dadurch gekennzeichnet, dass** der Reinigungsparameter ein Zeitintervall zwischen zwei Reinigungsmodi ist, wobei das Zeitintervall im Normalbetrieb insbesondere im Bereich von 4 bis 120 Stunden, bevorzugt im Bereich von 24 bis 96 Stunden, besonders bevorzugt im Bereich von 24 bis 72 Stunden liegt und/oder dass der Reinigungsparameter ein vorgegebenes Wasserbehandlungsvolumen von durch die Wasserbehandlungseinrichtung (2) durchgeleitetem Wasser, insbesondere während des Wasserbehandlungsmodus behandeltem Wasser, ist, wobei das Wasserbehandlungsvolumen im Normalbetrieb insbesondere im Bereich von 100 bis 5000 Liter, bevorzugt im Bereich von 200 bis 600 Liter, besonders bevorzugt im Bereich von 200 bis 400 Liter, liegt.

4. Steuereinrichtung (S) nach Anspruch 3, **gekennzeichnet durch** eine Verkürzung des Zeitintervalls oder eine Verringerung des Wasserbehandlungsvolumens in Variante a) in Abhängigkeit der Höhe des durch den zumindest einen Temperatursensor (5, 6) erfassten Temperaturwerts, speziell in Abhängigkeit des die Grenztemperatur übersteigenden Werts.

5. Steuereinrichtung (S) nach einem der vorangehenden Ansprüche, **gekennzeichnet durch** eine Änderung oder Verringerung des Reinigungsparameters gemäß Variante a) in Abhängigkeit davon,
(i) ob die erfasste Wassertemperatur während einer vorgegebenen Behandlungsdauer im Wasserbehandlungsmodus die Grenztemperatur unterschreitet, und/oder
(ii) ob die erfasste Wassertemperatur bei Durchleiten eines vorgegebenen Volumens an Wasser durch die Wasserbehandlungseinrichtung (2) die Grenztemperatur unterschreitet und/oder
(iii) ob eine während des Wasserbehandlungsmodus erreichte, im Wesentlichen konstante Wassertemperatur oberhalb der Grenztemperatur erreicht wird.

6. Steuereinrichtung (S) nach einem der vorangehenden Ansprüche, **dadurch gekennzeichnet, dass** die Trinkwasserbehandlungsanlage (1) einen Standby-Modus aufweist, in dem insbesondere kein Leiten von Wasser in oder durch die Wasserbehandlungseinrichtung (2) erfolgt.

7. Steuereinrichtung (S) nach Anspruch 6, **gekennzeichnet durch** eine Einleitung des Reinigungsmodus gemäß Variante b) bei Übersteigen der Grenztemperatur im Standby-Modus.

8. Steuereinrichtung (S) nach einem der vorangehenden Ansprüche, **gekennzeichnet durch** eine Einleitung des Reinigungsmodus gemäß Variante b), wenn die erfasste Wassertemperatur die Grenztemperatur über eine vorgegebene Dauer übersteigt, bevorzugt eine vorgegebene Dauer zwischen 1 und 10 Stunden, besonders bevorzugt zwischen 2 und 8 Stunden, ganz besonders bevorzugt zwischen 3 und 6 Stunden, und/oder eine Einleitung des Reinigungsmodus gemäß Variante b), wenn seit der letzten Durchführung des Reinigungsmodus eine vorgegebene Mindestzeit vergangen ist, insbesondere eine Mindestzeit im Bereich von 1 bis 120 Stunden, bevorzugt im Bereich von 1 bis 24 Stunden, besonders bevorzugt im Bereich von 2 bis 10 Stunden, ganz besonders bevorzugt im Bereich von 3 bis 6 Stunden, und/oder eine Einleitung des Reinigungsmodus gemäß Variante b), wenn seit der letzten Durchführung des Reinigungsmodus ein vorgegebenes Mindestvolumen an Wasser durch die Wasserbehandlungseinrichtung (2) durchgeleitet wurde, insbesondere ein Volumen von mehr als drei Litern, bevorzugt mehr als fünf Litern.

9. Steuereinrichtung (S) nach einem der vorangehenden Ansprüche, **dadurch gekennzeichnet, dass** der Reinigungsmodus ein Desinfizieren der Wasserbehandlungseinrichtung (2) durch Einleiten eines Desinfektionsmittels in die Wasserbehandlungseinrichtung (2), insbesondere gefolgt von einem Ausleiten des Desinfektionsmittels nach erfolgter Desinfektion über einen Abfluss (7) der Trinkwasserbehandlungsanlage (1), umfasst.

10. Steuereinrichtung (S) nach einem der vorangehenden Ansprüche, **dadurch gekennzeichnet, dass** der Reinigungsmodus ein Spülen der Wasserbehandlungseinrichtung (2) durch Einleiten einer Spülflüssigkeit und/oder Wasser, bevorzugt einem vorgegebenen Volumen der Spülflüssigkeit bzw. von Wasser, insbesondere verbunden mit einem anschließenden Ausleiten der Spülflüssigkeit bzw. des Wassers über einen Abfluss (7) der Trinkwasserbehandlungsanlage (1), umfasst, insbesondere ein Einleiten von Wasser zumindest solange, bis ein Unterschreiten eines vorgegebenen Temperaturschwellwerts durch den zumindest einen Temperatursensor (5, 6) erfasst wird und/oder bis durch den zumindest einen Temperatursensor (5, 6) eine im Wesentlichen konstante Wassertemperatur erfasst wird.

11. Steuereinrichtung (S) nach einem der vorangehenden Ansprüche **gekennzeichnet durch** eine als Enthärtungsanlage ausgebildete Trinkwasserbehandlungsanlage (1), wobei die Wasserbehandlungseinrichtung (2) bevorzugt regenerierbare Wasserbehandlungsmittel enthält und im Reinigungsmodus und/oder in einem zusätzlichen Regeneriermodus eine Regeneration der regenerierbaren Wasserbehandlungsmittel, sowie besonders bevorzugt eine Desinfektion der Wasserbehandlungseinrichtung (2), erfolgt.

12. Steuereinrichtung (S) nach einem der vorangehenden Ansprüche, **gekennzeichnet durch** eine als Filteranlage ausgebildete Trinkwasserbehandlungsanlage (1), wobei die Wasserbehandlungseinrichtung (2) bevorzugt ein Filtermaterial oder ein Ionenaustauschermaterial enthält, insbesondere ein im Reinigungsmodus und/oder in einem zusätzlichen Regeneriermodus regenerierbares Filtermaterial oder Ionenaustauschermaterial.

13. Steuereinrichtung (S) nach einem der vorangehenden Ansprüche, **dadurch gekennzeichnet, dass** die Trinkwasserbehandlungsanlage (1) einen Strömungssensor, insbesondere einen Durchflußsensor oder einen Wasserzähler, zur Erfassung der in die Trinkwasserbehandlungsanlage (1) bzw. die Wasserbehandlungseinrichtung (2) eingeleiteten und/oder durch diese durchgeleiteten Wassermenge aufweist.

14. Steuereinrichtung (S) nach einem der vorangehenden Ansprüche, **gekennzeichnet durch** eine kontinuierliche Erfassung der Wassertemperatur durch den zumindest einen Temperatursensor (5, 6) und/oder eine Speicherung der erfassten Wassertemperaturen in einer Datenbank, insbesondere eine Erfassung und/oder Speicherung der erfassten Wassertemperaturen in Verbindung mit der in die Wasserbehandlungseinrichtung (2) eingeleiteten und/oder durch die Wasserbehandlungseinrichtung (2) durchgeleiteten Wassermenge und/oder in Verbindung mit dem jeweiligen Modus der Trinkwasserbehandlungsanlage (1), wobei bevorzugt zumindest eine Speicherung der in dem Wasserbehandlungsmodus erfassten Wassertemperatur nach Durchleiten eines vorgegebenen Mindestvolumens an Wasser und/oder bei Erreichen einer im Wesentlichen konstanten Wassertemperatur erfolgt.

15. Verfahren zur Steuerung einer Trinkwasserbehandlungsanlage (1) mit einer Wasserbehandlungseinrichtung (2), einem Eingang (3) zum Einleiten von Wasser in die Wasserbehandlungseinrichtung (2) und einem Ausgang (4) zum Ausleiten von behandeltem Wasser aus der Trinkwasserbehandlungsanlage (1), wobei die Trinkwasserbehandlungsanlage (1) in mindestens einem Wasserbehandlungsmodus, in dem Wasser vom Eingang (3) durch die Trinkwasserbehandlungsanlage (1) zum Ausgang (4) geleitet und das Wasser dabei in der Wasserbehandlungseinrichtung (2) behandelt wird, und einem Reinigungsmodus, in dem die Wasserbehandlungseinrichtung (2) desinfiziert und/oder gespült wird, betreibbar ist und ein durch einen vorgegebenen Reinigungsparameter bestimmtes, regelmäßiges Einleiten des Reinigungsmodus erfolgt, **dadurch gekennzeichnet, dass** die Trinkwasserbehandlungsanlage (1) zumindest einen Temperatursensor (5, 6) zur Erfassung der Wassertemperatur vor und/oder in der Wasserbehandlungseinrichtung (2) aufweist und
a) der Reinigungsparameter geändert wird, wenn die durch den zumindest einen Temperatursensor (5, 6) erfasste Wassertemperatur eine festgelegte Grenztemperatur übersteigt,
und/oder
b) der Reinigungsmodus unmittelbar und insbesondere unabhängig vom vorgegebenen Reinigungsparameter eingeleitet wird, wenn die durch den zumindest einen Temperatursensor (5, 6) erfasste Wassertemperatur eine festgelegte Grenztemperatur übersteigt.
